**Europäisches Patentamt**

**European Patent Office**

**Office européen des brevets**

(19)

(11) Veröffentlichungsnummer: **0 347 622**

**A2**

(12) # EUROPÄISCHE PATENTANMELDUNG

(21) Anmeldenummer: **89109814.7**

(22) Anmeldetag: **31.05.89**

(51) Int. Cl.⁴: **H04N 3/185**

(30) Priorität: **23.06.88 DE 3821113**

(43) Veröffentlichungstag der Anmeldung:
**27.12.89 Patentblatt 89/52**

(84) Benannte Vertragsstaaten:
**AT CH DE FR GB IT LI**

(71) Anmelder: **GRUNDIG E.M.V.**
**Elektro-Mechanische Versuchsanstalt Max**
**Grundig holländ. Stiftung & Co. KG.**
**Kurgartenstrasse 37**
**D-8510 Fürth/Bay.(DE)**

(72) Erfinder: **Zipser, Otfried GRUNDIG E.M.V. Max**
**Grundig**
**holländ. Stiftung & Co KG Kurgartenstrasse**
**37**
**D-8510 Fürth/Bay.(DE)**
Erfinder: **Schmotzer, Günther GRUNDIG E.M.V.**
**Max Grundig**
**holländ. Stiftung & Co KG Kurgartenstrasse**
**37**
**D-8510 Fürth/Bay.(DE)**

(54) **Schaltnetzteil mit kombinierter Horizontalendstufenschaltung in Bildwiedergabegeräten.**

(57) Bei dem aus der EP-PS 133 980 bekannten Schaltnetzteil mit kombinierter Horizontalendstufenschaltung wird die Hochspannung für die Anode der Bildröhre entweder unter Verwendung einer an die Hochspannungswicklung des Transformators angeschlossenen Hochspannungskaskade erzeugt oder dadurch gewonnen, daß die Hochspannungswicklung als Split ausgebildet ist. Beim neuen Schaltnetzteil sollen die Hochspannung und die Fokussierspannung auf konstruktiv einfache Weise gewonnen werden, wobei sichergestellt sein soll, daß die im Ableitwiderstand erzeugte Wärme zu keinen Schäden im Transformator führen kann.

Dies wird im wesentlichen dadurch erreicht, daß die Hochspannung durch die Reihenschaltung zweier Dioden und der Hochspannungswicklung gewonnen wird und daß ein Spannungsteiler vorgesehen ist, dessen einzelne Widerstände in einem gemeinsamen Gehäuse auf der Bildrohrsockelplatte angeordnet sind, wobei der Spannungsteiler als Ableitwiderstand für die Hochspannung verwendet wird.

## SCHALTNETZTEIL MIT KOMBINIERTER HORIZONTALENDSTUFENSCHALTUNG IN BILDWIEDERGABEGE-RÄTEN

Die Erfindung betrifft ein Schaltnetzteil mit kombinierter Horizontalendstufenschaltung in Bildwiedergabegeräten mit dem in Oberbegriff des Anspruchs 1 angebenen Merkmalen.

Ein derartiges Schaltnetzteil aus den europ. Patentschriften 090 085 und 133 980 der Anmelderin bekannt. Der Vorteil eines derartigen Schaltnetzteils besteht insbesondere darin, daß als galvanische Trennstelle zwischen dem Versorgungsnetz und der Chassisseite nur ein einziger Transformator notwendig ist, über dessen chassisseitige Wicklungen sämtliche im Bildwiedergabegerät benötigten Betriebsspannungen gewonnen werden können. Die Hochspannung für die Anode der Bildröhre wird beim bekannten Schaltnetzteil entweder unter Verwendung einer an die Hochspannungswicklung angeschlossenen Hochspannungskaskade erzeugt oder dadurch, daß die Hochspannungswicklung als Split ausgebildet ist.

Aus der DE-OS 29 44 220 ist ein Zeilentransformator für einen Fernsehempfänger mit einer die Zeilenablenkspulen speisenden Primärseite und einer die Hochspannung liefernden Sekundärseite mit zwei gleichsinnig in Reihe geschalteten Hochspannungsgleichrichtern bekannt. Bei diesem Zeilentransformator enthält die Primär- und die Sekundärseite jeweils nur eine Wicklung. Ferner liegt der erste Gleichrichter zwischen dem ersten Ende der Hochspannungswicklung und Masse und der zweite Gleichrichter zwischen dem zweiten Ende der Hochspannungswicklung und der Anode der Bildröhre.

Aus der europ. Patentschrift 035 758 ist eine Schaltungsanordnung zur Erzeugung von Versorgungsspannungen für Bildröhren von Fernsehgeräten bekannt. Diese Schaltungsanordnung enthält eine Hochspannungskaskade, an deren Ausgang ein nach Masse geschalteter Spannungsteiler angeordnet ist. Der Spannungsteiler besteht aus insgesamt 4 Widerständen und hat einen Abgriff für die Fokussierspannung und einen oder mehrere Abgriffe für eine bzw. mehrere Schirmgitterspannung(en) der Bildröhre.

Aus der deutschen Patentschrift 27 19 146 ist es bekannt, den Ableitwiderstand und den Fokusregler zwischen den Hochspannungsanschluß der Bildröhre und Masse in Reihe zu schalten, wobei der Ableitwiderstand konstruktiv mit dem Hochspannungsstecker der Bildröhre vereinigt und der Fokusregler auf der Bildrohrsockelplatte angeordnet ist.

Weiterhin ist es aus der deutschen Patentschrift 28 19 990 bekannt, den Ableitwiderstand und den Fokusregler außerhalb der vergossenen Hochspannungskaskade anzuordnen. Dabei besteht der Ableitwiderstand aus zwei Teilwiderständen, deren erster sich in einem eigenen vergossenen Isoliergehäuse entweder im Hochspannungskabel oder im Hochspannungsstecker der Bildröhre befindet und deren zweiter in einem gemeinsamen Gehäuse mit dem Fokusregler untergebracht ist.

Schließlich ist es aus der deutschen Auslegeschrift 28 14 010 bekannt, den Ableitwiderstand aus einem Festwiderstand und einem Potentiometer aufzubauen, wobei der Festwiderstand zusammen mit der Hochspannungskaskade vergossen und das Potentiometer außerhalb des Vergusses angeordnet ist.

Ausgehend vom Stand der Technik gemäß der europ. Patentschrift 133 980 liegt der Erfindung die Aufgabe zugrunde, einen Weg aufzuzeigen, wie auf konstruktiv einfache Weise die Hochspannung für die Bildröhrenanode und die Fokussierspannung erzeugt werden können, wobei sichergestellt sein soll, daß die im Ableitwiderstand erzeugte Wärme zu keinen Schäden im Transformator führen kann.

Diese Aufgabe wird bei einem Schaltnetzteil mit den im Oberbegriff des Anspruchs 1 angegebenen Merkmale durch die im kennzeichnenden Teil des Anspruchs 1 angegebenen Merkmale gelöst. Vorteilhafte Weiterbildungen ergeben sich aus den Unteransprüchen.

Im folgenden werden anhand der (einzigen) Figur das beanspruchte Schaltnetzteil und dessen vorteilhafte Eigenschaften näher erläutert.

Das gezeigte Schaltnetzteil enthält einen Transformator 1, welcher auf der Netzseite eine Primärwicklung 2 und eine Regelwicklung 3 sowie auf der Chassisseite eine Hochspannungswicklung 4, eine Wicklung 5, über die eine Versorgungsspannung für die Horizontalendstufe erzeugt wird, eine Wicklung 6 für eine erste Niedervoltspannung (z.B. für die Tonsignalstufen) und eine Wicklung 7 für eine zweite Niedervoltspannung(z.B. für die Vertikalablenkung) enthält. Auf die an den Wicklungen 2,3,5,6 und 7 angeschlossenen Schaltungen wird im folgenden nicht näher eingegangen, da deren Aufbau dem Fachman grundsätzlich geläufig und ferner zum Verständnis der Erfindung nicht notwendig ist.

An den einen Anschluß der Hochspannungswicklung 4 ist die Kathode einer Diode 9 angeschlossen, deren Anode an Masse gelegt ist. An den anderen Anschluß der Hochspannungswicklung 4 ist die Anode einer Diode 8 angeschlossen, an deren Kathode die gewünschte Hochspannung zur Verfügung steht. Der wesentliche Vorteil dieser Art der Hochspannungserzeugung besteht darin, daß an den beiden Anschlüssen der Hochspannungswicklung 4 bezogen auf Masse und bei gesperrten Dioden eine Spannung mit unterschiedlicher Polarität ansteht. Das hat zur Folge, daß die Spannung in der Mitte der Wicklung bezogen auf Masse Null ist. Dies führt zu einer - im Vergleich zu bekannten Anordnungen - verringerten Störstrahlung des Transformators. Ferner benötigt die beschriebene Hochspannungserzeugungsvorrichtung nur wenig Platz und kommt - z.B. im Vergleich zu den aus den europ. Patentschriften 090 085 und 133 980 bekannten Hochspannungserzeugungsvorrichtungen - mit wenigen Bauelementen aus.

Zur Vermeidung von Hochspannungsüberschlägen und Sprühen ist der gesamte Transformator einschließlich der beiden Dioden 8 und 9 in einer ersten Vergußmasse, vorzugsweise Epoxidharz, vergossen. Die Verwendung von Epoxidharz als Vergußmasse ist deshalb vorteilhaft, weil die im Handel erhältlichen Dioden üblicherweise ebenfalls in Epoxidharz vergossen sind. Würde als Vergußmasse für den Transformator ein anderes Material gewählt, so könnte es bei ungünstigen Betriebsbedingungen (Wärme!) aufgrund der unterschiedlichen Ausdehnungskoeffizienten der Vergußmaterialien zu ungewünschten Vakuolen kommen.

Die Kathode der Diode 8 ist über ein Hochspannungskabel 11 über die Bildrohrsockelplatte 19 des Bildwiedergabegerätes mit der Anode A der (nicht gezeichneten) Bildröhre verbunden. Das Hochspannungskabel 11 besitzt im Bereich der Bildrohrsockelplatte 19 einen Abgriffpunkt P, welcher über einen Spannungsteiler 12,13, 14,15,16 mit Masse verbunden ist.

Dieser Spannungsteiler hat zum einen die Aufgabe eines Ableitwiderstands zur Entladung der Bildröhrenanode nach Masse. Der Spannungsteiler ist dabei derart dimensioniert, daß ein wesentlicher Teil der Anodenhochspannung an einem ersten Widerstand 12 des Spannungsteilers abfällt. Ferner wird der Spannungsteiler zur Erzeugung der Fokussierspannung verwendet. Hierzu sind an den ersten Widerstand 12 zwei weitere Widerstände 13 und 14 angeschlossen, wobei der Widerstand 13 einen Abgriff für die Fokussierspannung $U_F$ aufweist. Weiterhin wird der Spannungsteiler zur Erzeugung einer oder mehrerer Schirmgitterspannungen für die Bildröhre verwendet. Hierzu sind an den Widerstand 14 des Fokusreglers zwei weitere Widerstände 15 und 16 angeschlossen, wobei der Widerstand 15 einen Abgriff für eine Schirmgitterspannung $U_G$ aufweist. Der Widerstand 16 des Schirmgitterreglers ist mit Masse verbunden.

Sämtliche Widerstände der Spannungsteilers 12,13,14,15,16 sind in einem gemeinsamen Gehäuse 17,18 als kompakte Einheit auf der Bildrohrsockelplatte 19 angeordnet. Der Widerstand 12 ist dabei innerhalb des gemeinsamen Gehäuses in einer zweiten Vergußmasse 17 vergossen. Die Widerstände 13,14,15 und 16 sind außerhalb der Vergußmasse 17 angeordnet.

Die Vergußmasse 17 besteht vorzugsweise aus Silikonkautschuk, welcher eine größere Elastizität hat als Epoxidharz. Dies hat den Vorteil, daß bei einer Erwärmung des Widerstandes 12 die Wahrscheinlichkeit, daß Sprünge im Material auftreten, stark verringert ist.

Die beschriebene Gesamtanordnung hat außer den bereits genannten noch folgende weitere Vorteile:

Aufgrund der räumlichen Trennung von Ableitwiderstand und Hochspannungserzeugungsanordnung bzw. Transformator kann die im Ableitwiderstand entstehende Wärme keinesfalls zu einer Zerstörung der Hochspannungserzeugungsanordnung bzw. des Transformators führen. Hierbei wären insbesondere die Dioden 8 und 9 gefährdet. Bei einer eventuellen durch eine Überhitzung des Ableitwiderstandes hervorgerufenen Zerstörung der Vergußmasse, in der sich der Widerstand 12 befindet, braucht lediglich die Einheit 17,18 auf der Bildrohrsockelplatte ausgetauscht zu werden. Aufgrund der Gewinnung der Fokussierspannung und der Schirmgitterspannung auf der Bildrohrsockelplatte ergibt sich eine einfache Leitungsführung. Insbesondere ist vom Transformator in der Vergußmasse 10, der sich üblicherweise auf dem Gerätechassis befindet, zur Bildrohrsockelplatte 19, welche sich in unmittelbarer Nähe der Bildröhre befindet, nur eine einzige Kabelverbindung notwendig.

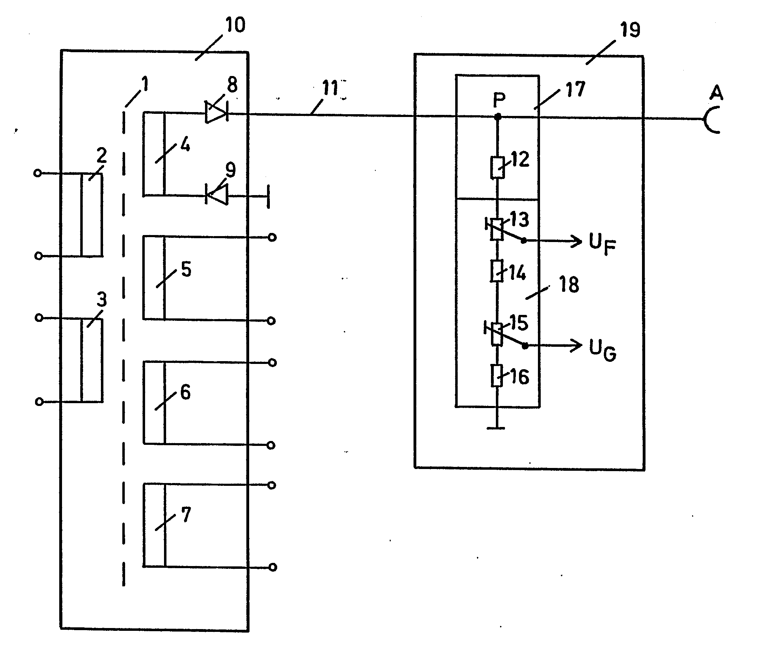

**Ansprüche**

1. Schaltnetzteil mit kombinierter Horizontalendstufenschaltung in Bildwiedergaberäten, bei dem als galvanische Trennstelle zwischen Netz- und Chassiseite nur ein Transformator vorgesehen ist, welcher netzseitig zumindest eine Primärwicklung und eine Regelwicklung sowie chassisseitig Wicklungen aufweist, die zur Erzeugung einer Vorsorgungsspannung für die Horizontalendstufen, einer Hochspannung und mehrerer Niedervoltspannungen verwendet werden, **dadurch gekennzeichnet,** daß
- ein erster Anschluß der Hochspannungswicklung (4) mit der Kathode einer ersten Diode (9) verbunden ist, deren Anode an Masse gelegt ist,
- ein zweiter Anschluß der Hochspannungswicklung (4) mit der Anode einer zweiten Diode (8) verbunden ist, an deren Kathode die Hochspannung zur Verfügung steht, welche mittels eines Hochspannungskabels (11) über die Bildrohrsockelplatte (19) zur Anode (A) der Bildröhre geführt wird,
- sämtliche Wicklungen des Transformators (1) einschließlich der beiden Dioden (8, 9) gemeinsam in einer ersten Vergußmasse (10) vergossen sind,

- das Hochspannungskabel auf der Bildrohrsockelplatte (19) einen Abgriff (P) besitzt, welcher über einen Spannungsteiler (12,13,14,15,16), der als Ableitwiderstand und zur Erzeugung der Fokussierspannung verwendet wird, mit Masse verbunden ist, und

- der Spannungsteiler (12,13,14,15,16) in einem gemeinsamen Gehäuse (17,18) angeordnet ist.

2. Schaltnetzteil nach Anspruch 1, **dadurch gekennzeichnet**, daß der Spannungsteiler einen ersten, innerhalb des gemeinsamen Gehäuses in einer zweiten Vergußmasse (17) vergossenen Widerstand (12) und ein in Reihe dazu geschaltetes, nicht vergossenes erstes Potentiometer (13,14) enthält, welches einen Abgriff für die Fokussierspannung ($U_F$) aufweist.

3. Schaltnetzteil nach Anspruch 2, **dadurch gekennzeichnet**, daß der Spannungsteiler ein zweites Potentiometer (15,16) enthält, welches einen Abgriff für eine Schirmgitterspannung ($U_G$) aufweist.

4. Schaltnetzteil nach einem oder mehreren der Ansprüche 1 - 3, **dadurch gekennzeichnet**, daß die beiden Vergußmassen (10,17) aus unterschiedlichen Materialien bestehen.

5. Schaltnetzteil nach Anspruch 4, **dadurch gekennzeichnet**, daß die erste Vergußmasse (10) aus Epoxidharz besteht.

6. Schaltnetzteil nach Anspruch 4 oder 5, **dadurch gekennzeichnet**, daß die zweite Vergußmasse (17) aus Silikon-Kautschuk besteht.

EP 0 347 622 A2